# EUROPEAN PATENT APPLICATION

(11) **EP 4 425 781 A1**
(43) Date of publication of application: **04.09.2024**
(21) Application number: 23305272.9
(22) Date of filing: 02.03.2023
(51) Int. Cl.: H02M 7/483, H02M 7/487, H05B 7/144

(54) **ARC FURNACLE FACILITY**

(71) Applicant: GE Energy Power Conversion Technology Ltd, Rugby, Warwickshire CV21 1BD (GB)
(72) Inventor: PERMUY, Alfred, 91140 VILLEBON-SUR-YVETTE (FR); FAHRNER, Laurent, 91140 VILLEBON SUR YVETTE (FR); BASIC, Duro, 91140 VILLEBON SUR YVETTE (FR); SIALA, Sami, 91140 VILLEBON SUR YVETTE (FR); BAVIERE, Cyrille, 91140 VILLEBON SUR YVETTE (FR); ZHOU, Zhi, New York, 12309-1027 (US)
(74) Representative: Casalonga

(57) **Abstract**

The power supply system (1) for arc furnace (2, 100) includes:
- a power converter (9) intended to be connected to a polyphase supply grid (G), and
- a polyphase transformer (10) comprising a primary circuit connected to the power converter and a secondary circuit intended to be connected to at least one electrode of the arc furnace.

The power converter comprising an input device (24), a link circuit (25) comprising a first bus (26) and a second bus (27), and an output device (28).

The power supply system further comprises a command circuit (11) configured to command the input device (24) and the output device (28) to supply the electrode and to stabilize the courant and the voltage delivered by the grid when the electrode of the arc furnace is supplied by the power supply system to reduce rejections in the grid.

## Description

The present invention concerns arc furnaces, and more particularly a power supply system for arc furnaces, and an arc furnace facility comprising an arc furnace and such a power supply system.

Arc furnaces are highly nonlinear load resulting in considerable reactions on the power supply system, in particular so-called flicker.

The document EP 2 329 684 discloses a power supply system to supply a polyphase arc furnace from a grid.

The power supply system comprises an indirect power converter and a polyphase transformer.

The indirect power converter supplies a primary circuit of the transformer. A secondary circuit of the transformer supplies electrodes of the arc furnace.

The indirect power converter comprises a rectifier, DC link circuit, and an inverter connected to the rectifier with the DC link circuit.

The rectifier and the inverter comprise converter elements.

Each converter element consists of a multistage series circuit of submodules.

The number of stacked submodules is at least equal to the continuous voltage in the DC link circuit divided by the voltage supported by a submodule.

As the voltage in the DC link circuit is for example equal to 50 kV and one submodule supported a maximal voltage of 2.5 kV, the number of stacked submodules for each converter elements is at least equal to 20 so that the indirect power converter comprises at least 240 submodules for a three phase indirect power converter.

Each submodule comprises an energy storage capacitor and at least two controlled semiconductor switches.

The semiconductor switches are controlled to limit reactions on the grid in order to supress the flicker and in order to comply with grid quality standards.

The indirect power converter forms a conventional multilevel converter requiring a large number of submodules comprising at least two controlled semiconductor switches and an energy storage increasing the complexity of the command of the power converter, requiring a large space for the power converter, and generating loses so that the efficiency of the arc furnace is deteriorate.

The document EP2713495 discloses a multilevel converter having a reduced number of switches compared to the known power supply system for an arc furnace.

It is therefore proposed to remedy the disadvantages related to arc furnace power supply systems known from the prior art.

In view of the foregoing the invention proposes a power supply system for arc furnace including:
- a power converter intended to be connected to a polyphase supply grid, and
- a polyphase transformer comprising a primary circuit connected to the power converter and a secondary circuit intended to be connected to at least one electrode of the arc furnace.

The power converter comprises an input device, a link circuit comprising a first bus and a second bus, and an output device, wherein:
∘ the input device comprises a plurality of input modules, each input module being connected to the first bus and the second bus and being intended to be connected to a different phase of the supply grid to supply the link circuit with a continuous voltage from the said phase of the supply grid,
∘ the output device comprises a plurality of output modules, each output module is connected to the first bus and second bus and to a different phase of the primary circuit to supply the transformer with an alternative voltage from the circuit link.

Each input module comprises:
- a leg comprising:
   ∘ a first string connected to the first and second bus and comprising a plurality of switches connected in series, a first connecting node situated between two switches, a second connecting node situated between two switches, and a third connecting nodes situated between two switches, and
   o a second string comprising:
      - a first mid-connecting node
      - a plurality of switching units connected in series and extending between the first and second connecting points.

The first mid-connecting node is between two switching units so that the number of switching units between the first connecting point and the first mid-connecting node is equal to the number of switching units between the second connecting point and the first mid-connecting node.

The first mid-connecting node is intended to be connected to the said phase of the supply grid.

The third connecting node of each input module is connected together.

The power supply system further comprises a command circuit configured to command the switches, the switching units, and the output modules to supply the electrode and to stabilize the courant and the voltage delivered by the grid when the electrode of the arc furnace is supplied by the power supply system to reduce rejections in the grid.

Advantageously, the leg further comprises two compensating modules, each compensating module comprising a first end, and a plurality of switching units connected in series, the switching units of the first compensating module extending between the first connecting node and the first end of the first compensating unit, the switching units of the second compensating module extending between the second connecting node and the first end of the second compensating unit, the first ends of the first and second compensating modules being connected together, the control circuit being further configured to control the switching units of the compensating modules.

Preferably, the link circuit further comprises a filtering module including two second energy storage devices connected in series and extending between the first and the second bus, a midpoint between the two second energy storage devices being connected to the third connecting node of each input module.

Advantageously, each switch comprises at least a diode, the diodes of the switches being connected together so that the cathode of the diode of a switch is connected to the anode of the diode of an adjacent switch, the cathode of the diode of the switch at a first end of the first string being connected to the first bus and the anode of the diode of the switch at the second end of the first string being connected to the second bus.

Preferably, each switch further comprises at least a gate turn off thyristor, the anode of the gate turn off thyristor being connected to the cathode of the diode and the cathode of the a gate turn off thyristor being connected to the anode of the diode, the gate of the gate turn off thyristor being connected to the command circuit.

Advantageously, each switch further comprises at least a field effect transistor, wherein the drain of the transistor is connected to the cathode of the diode and the source of the transistor is connected to the anode of the diode, the gate of the transistor being connected to the command circuit.

Preferably, at least one switching unit comprises two controllable switches, each controllable switch comprising a first end, a second end, and an command input connected to the command circuit, the first end of a first controllable switch being connected to a first end of the energy storage device, the second end of the first controllable switch and the first end of the second controllable switch being connected to the first connection of the switching unit, and the second end of the second controllable switch being connected to the second end of the energy storage device and to the second connection of the switching unit.

Advantageously, at least one switching unit comprises four controllable switches, each controllable switch comprising a first end, a second end, and an command input connected to the command circuit, the first end of a first and a second controllable switches being connected to a first end of the energy storage device, the first end of a third controllable switch being connected to the first connection of the switching unit and to the second end of the first controllable switch, the first end of the fourth controllable switch being connected to the second connection of the switching unit and to the second end of the second controllable switch, and the second end of the third and fourth controllable switches being connected to the second end of the energy storage device.

Preferably, each output module comprises:
- a second leg comprising:
   o a third string connected to the first and second bus and comprising a plurality of second switches connected in series, a fourth connecting node situated between two switches, a fifth connecting node situated between two switches, and a sixth connecting nodes situated between two second switches, and
   o a fourth string comprising:
- a second mid-connecting node,
- a plurality of second switching units connected in series and extending between the fourth and the fifth connecting nodes.

The second mid-connecting node being between two second switching units so that the number of second switching units between the fourth connecting point and the second mid-connecting node is equal to the number of switching units between the fifth connecting point and the second mid-connecting node.

The second mid-connecting node is connected to a phase of the primary circuit.

The sixth connecting node of each output module are connected together.

The command circuit is further configured to command the second switches and the second switching unit to supply the electrode and to stabilize the courant and the voltage delivered by the grid when the electrode of the arc furnace is supplied by the power supply system to reduce rejections in the grid.

Advantageously, each second switch comprises a second gate turn off thyristor and a second diode, the second diodes of the second switches being connected together so that the cathode of the second diode of a second switch is connected to the anode of the second diode of an adjacent second switch, the cathode of the second diode of the second switch at a first end of the third string being connected to the first bus and the anode of the second diode of the second switch at the second end of the first string being connected to the second bus, the anode of the second gate turn off thyristor being connected to the cathode of the second diode and the cathode of the second gate turn off thyristor being connected to the anode of the second diode, and the gate of the second gate turn off thyristor being connected to the command circuit.

Preferably, each second switch comprises a second field effect transistor and a second diode, the second diodes of the second switches being connected together so that the cathode of the second diode of a second switch is connected to the anode of the second diode of an adjacent second switch, the cathode of the second diode of the second switch at a first end of the third string being connected to the first bus and the anode of the second diode of the second switch at the second end of the first string being connected to the second bus, the drain of the second transistor being connected to the cathode of the second diode and the source of the second transistor being connected to the anode of the second diode, and the gate of the second transistor being connected to the command circuit.

Advantageously, each output module comprises a fifth string comprising:
- a plurality of second switching units connected in series and extending between the first and second bus, and
- a third mid-connecting node.

The third mid-connecting node is between two second switching units so that the number of second switching units between the first bus and the third mid-connecting node is equal to the number of switching units between the second bus and the third mid-connecting node.

The third mid-connecting node is connected to a phase of the primary circuit.

Another object of the invention relates to an arc furnace facility.

The arc furnace facility comprises an arc furnace including at least one electrode and a power supply system as defined above, wherein the electrode is connected to at least one phase of the secondary circuit of the polyphase transformer.

Advantageously, the arc furnace comprises a plurality of electrodes, each electrode being connected to a different phase of the secondary circuit.

Preferably, the power supply system further comprises a rectifier connected to the electrode and to each phase of the secondary circuit to supply the electrode with a continuous voltage from the secondary circuit.

Other characteristics and advantages of the invention will emerge on reading the following description of embodiments of the invention, provided solely by way of non-limiting examples and with reference to the drawings in which:
Figure 1 illustrates schematically a first example of an arc furnace facility according to the invention,
Figure 2 illustrates schematically an input module know form the prior art,
Figure 3 illustrates schematically an output module know form the prior art,
Figure 4 illustrates schematically an embodiment of switches according to the invention,
Figure 5 illustrates schematically another embodiment of the switches according to the invention,
Figure 6 illustrates schematically another embodiment of the switches according to the invention,
Figure 7 illustrates schematically a first embodiment of switching units according to the invention,
Figure 8 illustrates schematically a second embodiment of switching units according to the invention,
Figure 9 illustrates schematically a second example of the output module according to the invention,
Figure 10 illustrates schematically a second example of the input module according to the invention,
Figure 11 illustrates a second example of the arc furnace facility according to the invention.

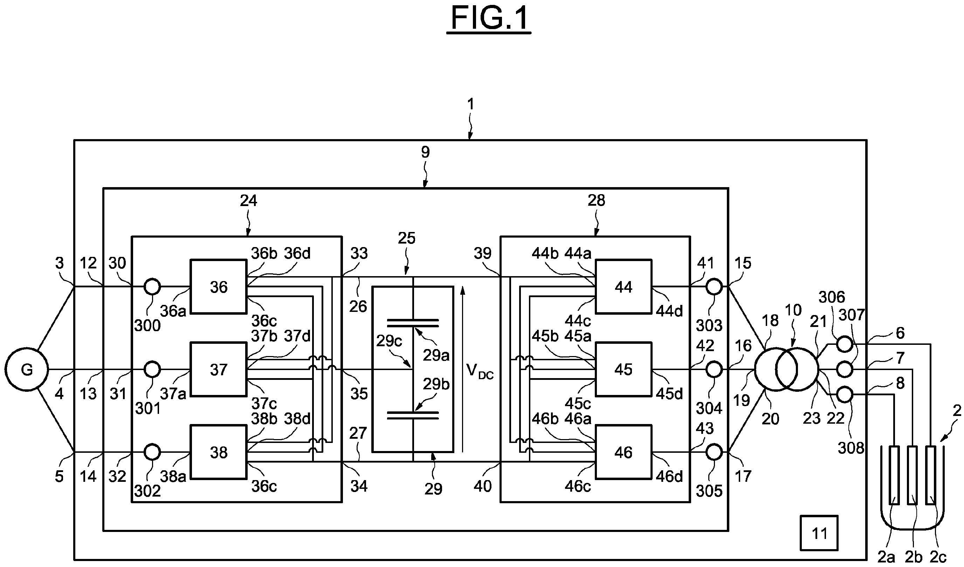

Figure 1 illustrates a first example of an arc furnace facility.

The arc furnace facility comprises a polyphase power supply system 1 connected to a grid G

The grid G supplies the power supply system 1 with electrical energy.

It is assumed that the power supply system 1 and the polyphase arc furnace 2 have each three phases, the grid G being a three phases supply grid.

Each of the power supply system 1 and the polyphase arc furnace 2 may have two phases or more than three phases, the grid G having the same number of phases than the power supply system 1.

The arc furnace 2 comprises three electrodes 2a, 2b, 2c.

The electrodes 2a, 2b, 2c supplied by the power supply system 1 generate electric arcs between the electrodes 2a, 2b, 2c to melt the contents of the arc furnace 2, for example scrap.

The power supply system 1 comprises three inputs 3, 4, 5, each input being connected to a different phase of the grid G, and three outputs 6, 7, 8.

Each output 6, 7, 8 is connected to an electrode 2a, 2b, 2c.

The power supply system 1 further comprises a power converter 9, a transformer 10, a command circuit 11, current sensors, and voltage sensors.

The power converter 9 comprises three inputs 12, 13, 14 and three outputs 15, 16, 17.

Each input 12, 13, 14 comprises a sensing module 300, 301, 302 comprising a voltage sensor and a current sensor measuring a voltage and a current of the said input.

Each output 15, 16, 17 comprises a sensing module 303, 304, 305 comprising a voltage sensor and a current sensor measuring a voltage and a current of the said output.

Each input 12, 13, 14 of the power converter 9 is connected to a different input 3, 4, 5 of the power supply system 1.

Each output 15, 16, 17 of the power converter 9 is connected to a different phase 18, 19, 20 of a primary circuit of the transformer 10.

The transformer 10 further comprises a secondary circuit including three phases 21, 22, 23, each phase being connected to a different output 6, 7, 8 of the power supply system 1.

Each phase 21, 22, 23 of the secondary circuit comprises a sensing module 306, 307, 308 comprising a voltage sensor and a current sensor measuring a voltage and a current of the said phase.

The power converter 9 further comprises an input device 24, a link circuit 25 comprising a first bus 26 and a second bus 27, and an output device 28.

The first bus 26 may have a higher potential than the second bus 27.

The voltage between the first and second buses 26, 27 is noted V_{DC}.

The link circuit 25 may further comprise a filtering module 29 including two energy storage devices 29a, 29b connected in series.

A first end of a first energy storage device 29a is connected to the first bus 26, a first end of the second energy storage 29b is connected to the second bus 27, and the first end of the second energy storage 29b and the second end of the first energy storage 29a are connected to a connecting node 29c.

Each energy storage device 29a, 29b comprises for example a capacitor.

The input device 24 comprises three inputs 30, 31, 32 and three outputs 33, 34, 35.

Each input 30, 31, 32 of the input device 24 is connected to a different input 12, 13, 14 of the power converter 9.

A first output 33 of the input device 24 is connected to the first bus 25, a second output 34 of the input device 24 is connected to the second bus 27, and the third output 35 is connected to the connecting node 29c.

The input device 24 further comprises identical input modules 36, 37, 38.

Each input module 36, 37, 38 is connected to a different input 30, 31, 32 of the input device 24.

Each input module 36, 37, 38 comprises an input 36a, 37a, 38a connected to the input 30, 31, 32 of the input device 24, a first output 36b, 37b, 38b connected to the first output 33 of the input device 24, a second output 36c, 37c, 38c connected to the second output 34 of the input device 24, and a third output 36d, 37d, 38d connected to the third output 35 of the input device 24.

The output device 28 comprises two inputs 39, 40 and three outputs 41, 42, 43.

A first input 39 of the output device 28 is connected to the first bus 26 and the second input is connected to the second bus 27.

A first output 41 of the output device 28 is connected to a first output 15 of the power converter 9, a second output 42 is connected to a second output 16, and a third output 43 is connected to the output 17.

The output device 28 further comprises identical output modules 44, 45, 46.

Each output module 44, 45, 46 comprises a first input 44a, 45a, 46a connected to the first input 39 of the output device 28, a second input 44b, 45b, 46b connected with the second input of the other output modules, and a third input 44c, 45c, 46c connected to the second input 40 of the output device 28.

Each output module 44, 45, 46 further comprises an output 44d, 45d, 46d connected to a different output 41, 42, 43 of the output device 28.

The input device 24 is intended to supply the link circuit 25 with a continuous voltage from the grid G.

The output device 28 is intended to supply with electrical energy the electrodes 2a, 2b, 2c through the transformer 10.

The energy storage devices 29a, 29b are designed to filter the continuous voltage of the link circuit 25 to stabilize the continuous voltage and to filter the currant variation on the buses 26, 27.

The filtering module 25 may decouple the input device 24 and the output device 28 to avoid that electrical perturbations generated by the arc furnace 2 are rejected on the grid G.

In variant, the link circuit 25 may not comprise the fileting module 29, the third output 35 of the input device 24 being not connected.

The command circuit 11 may comprise a processing unit and is intended to command the input and output devices 24, 28 to supply the electrodes 2a, 2b, 2c and to limit the rejection of perturbations generated by the arc furnace 2 on the grid G.

The supply system 1 supplies the arc furnace 2 while filtering the rejections of the arc furnace on the grid G.

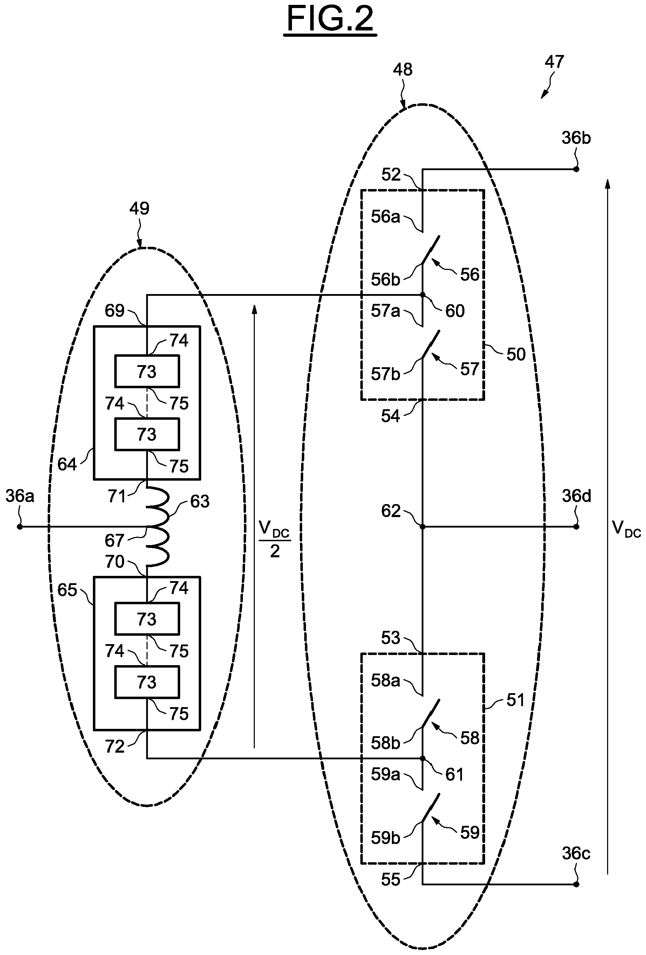

As the input modules 36, 37, 38 are identical, figure 2 illustrates schematically a first example of the input module 36 known from the document EP 2 713 495.

The input module 26 comprises a leg 47 comprising a first string 48 and a second string 49.

The first string 48 comprises a first branch 50 and a second branch 51.

Each branch 50, 51 comprises a first end 52, 53, a second end 54, 55, two switches 56, 57, 58, 59 connected in series and extending between the first and second ends 52, 54, 53, 55.

The first branch 50 further comprises a first connecting node 60 situated between the switches 56, 57 and the second branch 51 further comprises a second connecting node 61 situated between the switches 58, 59.

Each branch 50, 51 may comprise more than two switches, the two branches comprising a same number of switches.

Each switch 56, 57, 58, 59 comprises a first end 56a, 57a, 58a, 59a and a second end 56b, 57b, 58b, 59b.

The switches 56, 57 of the first branch 50 are connected in series so that the first end 57a of the switch 57 is connected to the second end 56b of the switch 56.

The first end 52 of the first branch 50 is connected to the first remaining end 56a of the switch 56 and the second end 54 of the first branch 50 is connected to the second remaining end 57b of the switch 57.

The remaining end of a switch is the end of the said switch which is not connected to an end of another switch.

The switches 58, 59 of the second branch 51 are connected in series so that the first end 59a of the switch 59 is connected to the second end 58b of the switch 58.

The first end 53 of the second branch 51 is connected to the first remaining end 58a of the switch 58 and the second end 55 of the second branch 50 is connected to the second remaining end 59b of the switch 59.

The first end 52 of the first branch 50 is connected to the first output 36b, the second end 55 of the second branch 51 is connected to the second output 36c, and the second end 24 of the first branch 50 and the first end 53 of the second branch 51 are connected to a third connecting node 62.

The third connecting node 62 is connected to the third output 36d.

The second string 49 comprises a first portion 64 and a second portion 65.

The second string 49 may further comprise a first inductor 63.

Each portion 64, 65 comprises a first end 69, 70, a second end 71, 72, and a plurality of switching units 73, each switching unit 73 comprising a first connection 74 and a second connection 75.

Each portion 64, 65 comprises a same number of switching units 73.

Each switching unit 73 includes a plurality of controllable switches and at least one energy storage device.

The switching units 73 of each portion 64, 65 are connected in series so that the first connection 74 of a switching unit 73 is connected to a second connection 75 of an adjacent switching unit 73.

The first remaining connection 74 of the switching unit 73 of the first portion 64 is connected to the first end 69 and the second remaining connection 75 of the switching unit 73 of the first portion 64 is connected to the second end 71.

The remaining connection of a switching unit is the connection of the said switching unit which is not connected to a connection of another switching unit.

The first end 69 of the first portion 64 is connected to the first connecting node 60 and the second end 71 is connected to a first end of the first inductor 63.

The first remaining connection 74 of the switching unit 73 of the second portion 65 is connected to the first end 70 and the second remaining connection 75 of the switching unit 73 of the second portion 65 is connected to the second end 72.

The first end 70 of the second portion 65 is connected to the a second end of the first inductor 63 and the second end 72 is connected to the second connecting node 61.

The second string 49 further comprises a first mid-connecting node 67 connecting the input 36a of the input module 36 to a mid-connecting node of the first inductor 63.

The first inductor 63 permits to limit current peaks in the second string 49 and the phases of the grid G during commutations of the switching units 73.

In variant, the second string 49 does not comprise the first inductor 63, the ends 71, 70 of the first and second portions 64, 65 and the input 36a of the input module 36 being connected to the first mid-connecting node 67, the first portion 64 or the second portion 65 comprising an inductor to limit the current peaks in the second string 49 and the second string 49 comprises another inductor connecting the input 36a of the input module 36 to the first mid-connecting node 67 to limit the current peaks in the phase of the grid G.

In another variant, the second string 49 does not comprise the first inductor 63, the ends 71, 70 of the first and second portions 64, 65 and the input 36a of the input module 36 are connected to the first mid-connecting node 67, each of the first portion 64 and the second portion 65 comprising an inductor to limit the current peaks in the second string 49 and the second string 49 may comprise another inductor connecting the input 36a of the input module 36 to the first mid-connecting node 67 to limit the current peaks in the phase of the grid G.

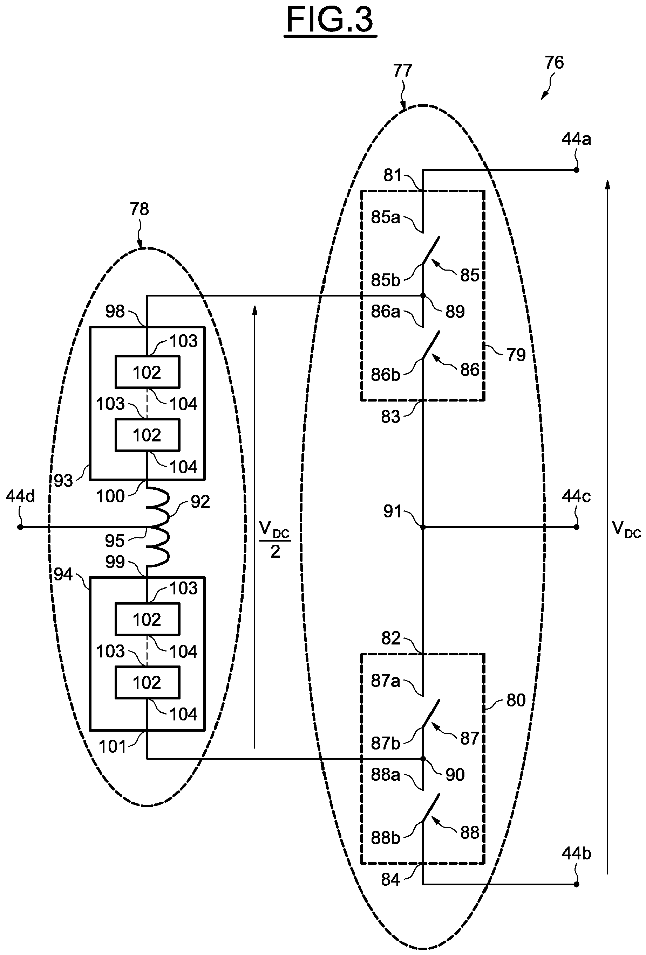

As the output modules 44, 45, 46 are identical, figure 3 illustrates schematically a first example of the output module 44.

The output module 44 comprises a second leg 76 comprising a third string 77 and a fourth string 78.

The third string 77 comprises a third branch 79 and a fourth branch 80.

Each branch 79, 80 comprises a first end 81, 82, a second end 83, 84, two second switches 85, 86, 87, 88 connected in series and extending between the first and second ends 81, 82, 83, 84.

Each branch 79, 80 may comprise more than two second switches, the two branches comprising a same number of second switches.

Each second switch 85, 86, 87, 88 comprises a first end 85a, 86a, 87a, 88a and a second end 85b, 86b, 87b, 88b.

The second switches 85, 86 of the third branch 79 are connected in series so that the first end 86a of the second switch 86 is connected to the second end 85b of the second switch 85.

The first end 81 of the third branch 79 is connected to the first remaining end 85a of the second switch 85 and the second end 83 of the third branch 79 is connected to the second remaining end 86b of the second switch 86.

The remaining end of a second switch is the end of the said second switch which is not connected to an end of another second switch.

The second switches 87, 88 of the fourth branch 80 are connected in series so that the first end 88a of the second switch 88 is connected to the second end 87b of the second switch 87.

The first end 82 of the fourth branch 80 is connected to the first remaining end 87a of the second switch 87 and the second end 84 of the fourth branch 80 is connected to the second remaining end 88b of the second switch 88.

The third branch 79 further comprises a fourth connecting node 89 situated between the second switches 85, 86 and the fourth branch 80 further comprises a fifth connecting node 90 situated between the second switches 87, 88.

The first end 81 of the third branch 79 is connected to the first input 44a, the second end 84 of the fourth branch 80 is connected to the second input 44b, and the second end 83 of the third branch 79 and the first end 82 of the fourth branch 80 are connected to a sixth connecting node 91.

The sixth connecting node 91 is connected to the third input 44c.

Each branch 79, 80 comprises the same number of second switches.

The fourth string 78 comprises a third portion 93, and a fourth portion 94.

The fourth string 78 may further comprise a second inductor 92.

Each portion 93, 94 comprises a first end 98, 99, a second end 100, 101, and a plurality of second switching units 102, each second switching unit 102 comprising a first connection 103 and a second connection 104.

Each portion 93, 94 comprises a same number of second switching units 102.

The second switching units 102 of each portion 93, 94 are connected in series so that the first connection 103 of a second switching unit 102 is connected to a second connection 104 of an adjacent switching unit 102.

The first remaining connection 103 of the second switching units 102 of the third portion 93 is connected to the first end 98 and the second remaining connection 104 of the second switching units 102 of the third portion 93 is connected to the second end 100.

The remaining connection of a second switch is the end of the said second switch which is not connected to an end of another second switch.

The first end 98 of the third portion 93 is connected to the fourth connecting node 89 and the second end 100 is connected to a first end of the second inductor 92.

The first remaining connection 103 of the second switching units 102 of the fourth portion 94 is connected to the first end 99 and the second remaining connection 104 of the second switching units 102 of the fourth portion 94 is connected to the second end 101.

The first end 99 of the fourth portion 94 is connected to the second end of the inductor 92 and the second end 101 is connected to the fifth connecting node 90.

The fourth string 78 further comprises a second mid-connecting node 95 connecting the output 44d of the output module 44 to a mid-connecting node of the second inductor 92.

The second inductor 92 permits to limit current peaks in the fourth string 78 and the phases of the arc furnace 2 during commutations of the switching units 73.

In variant, the fourth string 78 does not comprise the second inductor 92, the ends 99, 100 of the third and fourth portions 93, 94 and the output 44d of the output module 44 being connected to the second mid-connecting node 95, the third portion 93 or the fourth portion 94 comprising an inductor to limit the current peaks in the fourth string 78, and the fourth string 78 comprises another inductor connecting the output 44d of the output module 44 to the second mid-connecting node 95 to limit the current peaks in the phase of the arc furnace 2.

In another variant, the fourth string 78 does not comprise the second inductor 92, the ends 99, 100 of the third and fourth portions 93, 94 and the output 44d of the output module 44 being connected to the second mid-connecting node 95, each of the third portion 93 and the fourth portion 94 comprising an inductor to limit the current peaks in the fourth string 78, and the fourth string 78 may comprise another inductor connecting the output 44d of the output module 44 to the second mid-connecting node 95 to limit the current peaks in the phase of the arc furnace 2.

As explained in document EP 2 713 495, the voltage between the first and second connecting nodes 60, 61 of each input module 36, 37, 38 and the voltage between the fourth and fifth connecting nodes 89, 90 of each output module 44, 45, 46 is equal to V_{DC}/2 so that the number of switching units 73 and second switching units 102 equivalent to the submodules known form the prior art is divided by at least two compared to a power converter supplying an arc furnace known form the prior art reducing the complexity of the power converter 9 and the power loses generated by the power converter 9.

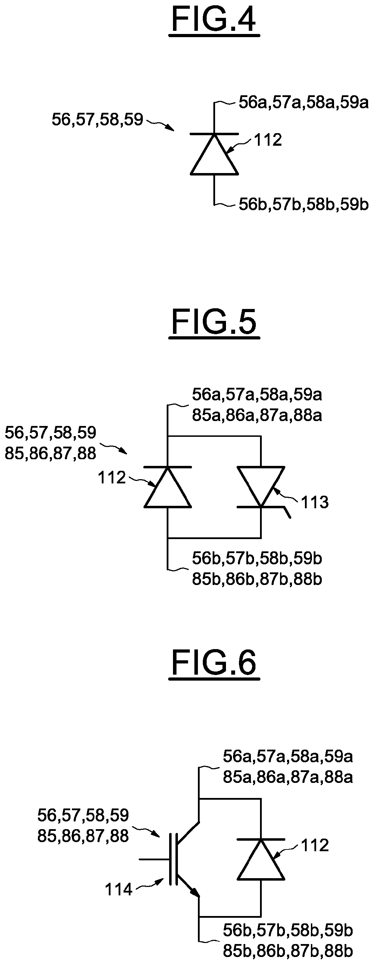

Figure 4 illustrates schematically an embodiment of the switches 56, 57, 58, 59.

The switch 56, 57, 58, 59 comprises a diode 112 extending between the first and the second ends of the switch 56, 57, 58, 59 so that the anode of the diode 112 is connected to the second end 56b, 57b, 58b, 59b of the switch and the cathode is connected to the first end 56a, 57a, 58a, 59a of the switch 56, 57, 58, 59.

As the diode 112 does need to be controlled by the command circuit 11, the first example of the switch comprising the diode 112 simplify the implementation of the switches 56, 57, 58, 59 in the input modules 36, 37, 38, the diode 112 being designed to support a voltage at least equal to V_{DC}/2.

Each switch 56, 57, 58, 59 may comprise a plurality of diodes 112 in series so that the anode of one diode is connected to the cathode of another diode, the number of diodes 112 being determined so that the set of diodes 112 in series supports a voltage at least equal to V_{DC}/2.

Figure 5 illustrates schematically another embodiment of the switches 56, 57, 58, 59 and the second switches 85, 86, 87, 88.

Each switch of the switches 56, 57, 58, 59 and the second switches 85, 86, 87, 88 comprises the diode 112 extending between the first and the second ends of the switch 56, 57, 58, 59, 85, 86, 87, 88 so that the anode of the diode 112 is connected to the second end 56b, 57b, 58b, 59b, 85b, 86b, 87b, 88b of the switch and the cathode is connected to the first end 56a, 57a, 58a, 59a, 85a, 86a, 87a, 88a of the switch 56, 57, 58, 59, 85, 86, 87, 88.

Each switch 56, 57, 58, 59, 85, 86, 87, 88 further comprises a gate turn off thyristor 113.

The gate of the gate turn off thyristor 113 is connected to the command circuit 11, the anode of the gate turn off thyristor 113 is connected to the cathode of the diode 112, and the cathode of the gate turn off thyristor 113 is connected to the anode of the diode 112.

The gate turn off thyristor 113 is designed to support a voltage at least equal to V_{DC}/2.

Each switch 56, 57, 58, 59 may comprise a plurality of gate turn off thyristors 113 in series so that the anode of one thyristor is connected to the cathode of another thyristor, the number of thyristors 113 being determined so that the set of thyristors 113 in series supports a voltage at least equal to V_{DC}/2.

Figure 6 illustrates schematically yet another embodiment of the switches 56, 57, 58, 59 and the second switches 85, 86, 87, 88.

Each switch of the switches 56, 57, 58, 59 and the second switches 85, 86, 87, 88 comprises the diode 112 extending between the first and the second ends of the switch 56, 57, 58, 59, 85, 86, 87, 88 so that the anode of the diode 112 is connected to the second end 56b, 57b, 58b, 59b, 85b, 86b, 87b, 88b of the switch and the cathode is connected to the first end 56a, 57a, 58a, 59a, 85a, 86a, 87a, 88a of the switch 56, 57, 58, 59, 85, 86, 87, 88.

Each switch 56, 57, 58, 59, 85, 86, 87, 88 further comprises a field effect transistor 114.

The field effect transistor 114 may be an insulated gate bipolar transistor IGBT.

The gate of the transistor 114 is connected to the command circuit 11, the drain of the transistor 114 is connected to the cathode of the diode 112 and the source of the transistor 114 is connected to the anode of the diode 112.

The transistor 114 is designed to support a voltage at least equal to V_{DC}/2.

Each switch 56, 57, 58, 59 may comprise a plurality of transistors 114 in series so that the drain of one transistor is connected to the source of another transistor, the number of transistors 114 being determined so that the set of transistors 114 in series supports a voltage at least equal to V_{DC}/2.

The inputs modules 36, 37, 38 may comprise one embodiment of the switches 56, 57, 58, 59 illustrated on figures 4, 5, 6, and the output modules 44, 45, 46 may comprise one embodiment of the second switches 85, 86, 87, 88 illustrated on figure 5, 6, the embodiment of the switches 56, 57, 58, 59 and the embodiment of the second switches 85, 86, 87, 88 may be different so that for example the switches 56, 57, 58, 59 comprise the embodiment illustrated on figure 4 and the second switches 85, 86, 87, 88 comprise the embodiment illustrated on figure 5.

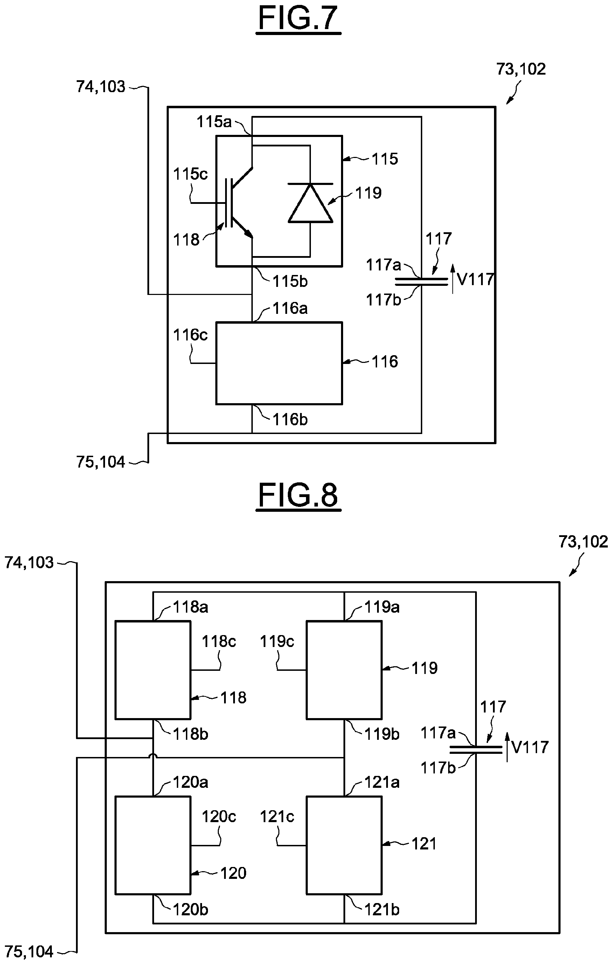

In variant, the embodiment of the switches 56, 57, 58, 59 and the embodiment of the second switches 85, 86, 87, 88 may have the same architecture, for example the switches 56, 57, 58, 59 and the second switches 85, 86, 87, 88 comprise the embodiment illustrated on figure 7.

Figure 7 illustrates schematically a first embodiment of the switching unit 73 and the second switching unit 102.

Each one of the switching unit 73 and the second switching unit 102 comprises two controllable switches 115, 116 and a second energy storage 117 comprising a first end 117a and a second end 117b.

The voltage between the first end 117a and the second end 117b of the second energy storage 117 is referenced V 117.

The second energy storage 117 comprises for example a capacitor.

Each controllable switch 115, 116 comprises a first end 115a, 116a, a second end 115b, 116b, and a command input 115c, 116c connected to the command circuit 11.

The first end 115a of a first controllable switch 115 is connected to the first end 117a of the second energy storage 117.

The second end 115b of the first controllable switch 115 and the first end 116a of the second controllable switch 116 are connected to the first end 74, 103 of the switching unit 73 or second switching unit 102.

The second end 116b of the second controllable switch 116 is connected to the second end 117b of the second energy storage 117 and to the second end 75, 104 of the switching unit 73 or second switching unit 102.

As the controllable switches 115, 116 are identical, only the first switch 115 is detailed.

The first switch 115 comprises a second transistor 118 and a second diode 119.

The second transistor 118 may be a field effect transistor, for example an IGBT transistor.

The gate of the second transistor 118 is connected to the command input 115c, the drain of the second transistor 118 and the cathode of the second diode 119 are connected to the first end 115a, and the source of the second transistor 118 and the anode of the second diode 119 are connected to the second end 115b.

Figure 8 illustrates schematically a second embodiment of the switching unit 73 and the second switching unit 102.

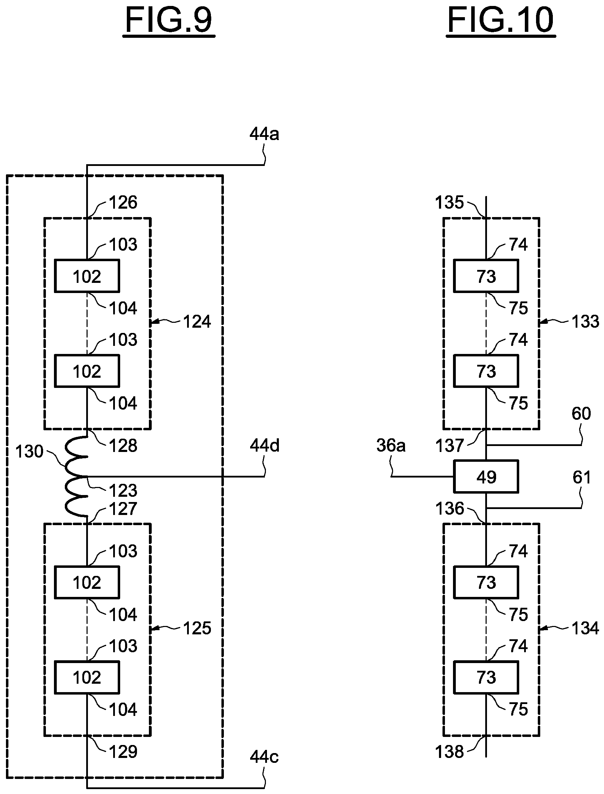

Each one of the switching unit 73 and the second switching unit 102 comprises four controllable switches 118, 119, 120, 121 identical to the controllable switches 115, 116 of the first embodiment illustrated on figure 10.

Each controllable switches 118, 119, 120, 121 comprises a first end 118a, 119a, 120a, 121a, a second end 118b, 119b, 120b, 121b, and a command input 118c, 119c, 120c, 121c connected to the command circuit 11

Each controllable switches 118, 119, 120, 121 further comprises the second energy storage 117.

The first end 118a of a first controllable switch 118 and the first end 119a of a second controllable switch 119 are connected to the first end 117a of the second energy storage 117.

The second end 120b of a third controllable switch 120 and the second end 121b of the fourth controllable switch 121 are connected to the second end 117b of the second energy storage 117.

The second end 118b of the first controllable switch 118 and the first end 120a of the third controllable switch 120 are connected to the first end 74, 103 of the switching unit 73 or second switching unit 102.

The second end 119b of the second controllable switch 119 and the first end 121a of the fourth controllable switch 121 are connected to the second end 75, 104 of the switching unit 73 or second switching unit 102.

The switching units 73 and the second switching units 102 according to the first embodiment illustrated on figure 7 has two states, each state delivering a different voltage value on the ends of the switching units 73 and the second switching units 102.

For example, in a first state, the switching units 73, 102 deliver a positive compensating voltage Vcc, and in a second state a nil voltage.

Each portion 64, 65, 93, 94 of the second string 49 and the fourth string 78 may comprise switching units 73 according to the first embodiment illustrated on figure 7 or according the second embodiment illustrated on figure 8.

In variant, each portion 64, 65, 93, 94 of the second string 49 and the fourth string 78 may comprise switching units 73 according to the first embodiment illustrated on figure 7 and according the second embodiment illustrated on figure 8.

The switching units 73 and the second switching units 102 according to the second embodiment illustrated on figure 8 has three states, each state delivering a different voltage value on the ends of the switching units 73 and the second switching units 102.

For example, in a first state, the switching units 73, 102 deliver a positive voltage Vcc, in a second state a nil voltage, and in a third state a negative compensating voltage -Vcc.

The embodiment of the switching units 73 of inputs modules 36, 37, 38 and the embodiment of the second switching units 102 of the output modules 44, 45, 46 may be identical or different, for example the switching units 73 may have the architecture of the first embodiment illustrated on figure 7 and the second switching units 102 may have the architecture of the second embodiment illustrated on figure 8.

Figure 9 illustrates schematically a second example of the output modules 44, 45, 46.

As the output modules 44, 45, 46 are identical, only the output module 44 is detailed in the following.

The output module 44 comprises a fifth portion 124, and a sixth portion 125.

The output module 44 may comprise a third inductor 123.

Each portion 124, 125 comprises a first end 126, 127, a second end 128, 129, and a plurality of second switching unit 102.

The first end 126 of the fifth portion 124 is connected to the first input 44a of the output module 44 and the second end 128 of the fifth portion 124 is connected to a first end of the third inductor 123.

The first end 127 of the sixth portion 125 is connected to the second end of the third inductor 123 and the second end of the sixth portion 125 is connected to the third input 44a of the output module 44.

The output module 44 further comprises a third mid-connecting node 130 connecting the output 44d of the output module 44 to a mid-connecting node of the third inductor 123.

The third inductor 123 permits to limit current peaks in the fifth portion 124, and a sixth portion 125 and the phases of the arc furnace 2 during commutations of the second switching units 102.

The second input 44b of the output module 44 is not connected.

The second switching units 102 of each portion 124, 126 are connected in series so that the first connection 103 of a second switching unit 102 is connected to a second connection 104 of an adjacent second switching unit 102.

The first remaining connection 103 of the second switching units 102 of the fifth portion 124 is connected to the first end 126 and the second remaining connection 104 of the second switching units 102 of the fifth portion 124 connected to the second end 128.

The remaining connection of a second switch unit is the connection of the said second unit which is not connected to a connection of another second switch unit.

The first remaining connection 103 of the second switching units 102 of the sixth portion 125 is connected to the first end 127 and the second remaining connection 104 of the second switching units 102 of the sixth portion 125 connected to the second end 129.

In variant, the output module 44 does not comprise the third inductor 123, the ends 127, 128 of the fifth portion 124 and the sixth portion 125 and the output 44d of the output module 44 being connected to the third mid-connecting node 130, the fifth portion 124 or the sixth portion 125 comprising an inductor to limit the current peaks in the output module 44, and the output module 44 comprises another inductor connecting the output 44d of the output module 44 to the third mid-connecting node 130 to limit the current peaks in the phase of the arc furnace 2.

In another variant, the output module 44 does not comprise the third inductor 123, the ends 127, 128 of the fifth portion 124 and the sixth portion 125 and the output 44d of the output module 44 being connected to the third mid-connecting node 130, each of the fifth portion 124 and the sixth portion 125 comprising an inductor to limit the current peaks in the output module 44, and the output module 44 may comprise another inductor connecting the output 44d of the output module 44 to the third mid-connecting node 130 to limit the current peaks in the phase of arc furnace 2.

Figure 10 illustrates schematically a second example of the input modules 36, 37, 38.

As the input modules 36, 37, 38 are identical, the first module 36 is detailed in the following.

The second example differs from the first example of the input module 36 illustrated on figure 2 in that the leg 47 further comprises two compensating modules 133, 134 comprising a first end 135, 136, a second end 137, 138, and a plurality of switching units 73.

The first end 135 of a first compensating module 133 is connected with the first end of the first compensating module of the other inputs modules 37, 38 and the second end 138 of the second compensating module 134 is connected with the second end of the second compensating module of the other inputs modules 37, 38.

The second end 137 of the first compensating module is connected to the first connecting node 60 and the first end 136 of the second compensating module 134 is connected to the second connecting node 61.

Each compensating module 133, 134 comprises a same number of switching units 73 connected in series so that the first end 74 of a switching unit 73 is connected to the second end 75 of an adjacent switching unit 73.

The first remaining connection 74 of the switching units 73 of the first compensating module 133 is connected to the first end 135 of the first compensating module 133 and the second remaining connection 75 of the switching units 73 of the first compensating module 133 is connected to the second end 137 of the first compensating module 133.

The first remaining connection 74 of the switching units 73 of the second compensating module 134 is connected to the first end 136 of the second compensating module 134 and the second remaining connection 75 of the switching units 73 of the second compensating module 134 is connected to the second end 138 of the second compensating module 134.

The two compensating modules 133, 134 act as static synchronous compensator STATCOM to enhance the quality of filtering of the supply system 1 to limit the rejections of the arc furnace on the grid G.

This example of input modules 36, 37, 38 is particularly advantageous when the switches 56, 57, 58, 59 comprises diodes according to the embodiment illustrated on figure 4.

As the switches are made from diodes, the control unit 11 cannot control the commutation of the switches to limit the rejections on the grid G, only the output modules contribute to reduce the rejections in the grid G.

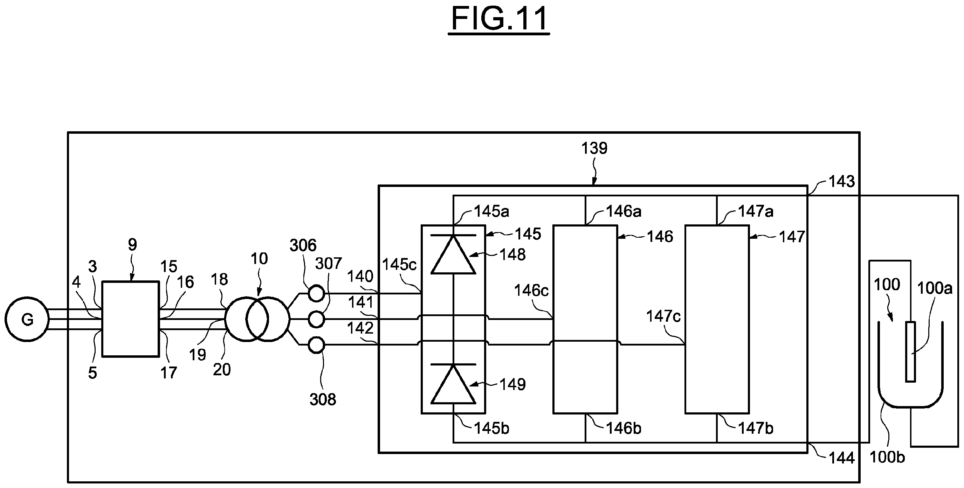

Figure 11 illustrates a second example of the arc furnace facility.

The arc furnace facility differs from the arc furnace facility illustrated on figure 1 in that the arc furnace facility comprises a direct voltage arc furnace 100 comprising only one electrode 100a and the power supply system 1 comprises a rectifier 139.

The rectifier 139 comprises a plurality of inputs 140, 141, 142, each input 140, 141, 142 being connected to a different phase 21, 22, 23 of the secondary circuit of the transformer 10.

The rectifier 139 further comprises a first output 143 connected to an enclosure 100b of the arc furnace 100and a second output 144 connected to the electrode 100a.

The rectifier 139 comprises the same number of identical legs 145, 146, 147 as the number of phases of the secondary circuit of the transformer 10, each leg 145, 146, 147 being connected to a different phase.

Each leg 145, 146, 147 comprises a first connection 145a, 146a, 147a, a second connection 145b, 146b, 147b, and a third connection 145c, 146c, 147c.

The first connection 145a, 146a, 147a of each leg 145, 146, 147 is connected to the first output 143 of the rectifier 139, the second connection 145b, 146b, 147b of each leg 145, 146, 147 is connected to the second output 144 of the rectifier 139, and the third connection 145c, 146c, 147c is connected to a different input 140, 141, 142 of the rectifier 139.

As the legs 145, 146, 147 are identical, only a first leg 145 is detailed.

The first leg 145 comprises two identical power diodes 148, 149 connected in series.

The cathode of a first power diode 148 is connected to the first connection 145a, the anode of the first power diode 148 and the cathode of the second power diode 149 are connected to the third connection 145c, and the anode of the second power diode 149 is connected to the second connection 145b.

The rectifier 139 rectifies the voltage delivered by each phase of the secondary circuit to supply the electrode 100a of the direct voltage arc furnace 100.

In variant, the rectifier 139 may comprise an active rectifier 139 made from controlled semiconductor, for example transistors and/or gate turn off thyristors.

The current sensors are disposed in the power converter 9 to determine the value of a current flowing in each phase of the grid G, in each phase of the arc furnace 2, 100, and in each portion 64, 65, 93, 94, 124, 125 of the legs of the input and output modules.

Each switching unit 73 and each second switching unit 102 comprises a voltage sensor to measure the voltage V 117 between the first end 117a and the second end 117b of the second energy storage 117.

Each second energy storage 117 is loaded when the voltage V 117 is equal to a reference voltage Vref equal for example to 2.5 kVolts.

The command circuit 11 controls the switches, the second switches, the switching units and the second switching units to stabilize the courant and the voltage delivered by the grid G when the electrodes of the arc furnace 2 is supplied by the power supply system, from the measurements delivered by the current and voltage sensors in order to limit reactions on the grid G in order to supress the flicker and in order to comply with grid quality standards

Figure 12 illustrates an example of implementation of the power supply 1.

It is assumed that the arc furnace is not supplied by the power converter 9 and that the voltage V117 between the first end 117a and the second end 117b of the second energy storage 117 of the switching units 73 and the second switching units 102 of the input modules 36, 37, 38 and the output modules 44, 45, 46 is less than the reference voltage Vref.

During a step 200, a preload step, the command circuit 11 controls the switches 56, 57, 58, 59, the second switches 85, 86, 87, 88, the switching units 73 and the second switching units 102 of the input modules 36, 37, 38 and the output modules 44, 45, 46 to load the second energy storages 117 of the input modules 36, 37, 38 and the output modules 44, 45, 46 from the grid G, and monitors the currents measured by the current sensors to detect a defect.

For each input module, the command circuit 11 closes the switches 56, 58 and opens the switches 57, 59 when the voltage in the associated phase of the grid G is positive, and opens the switches 56, 58 and closes the switches 57, 59 when the voltage in the associated phase of the grid G is negative.

Further, the command circuit 11 controls the controllable switches of the switching units 73 so that the voltage V117 of each second energy storage 117 is equal to the reference voltage Vref.

For each output module, the command circuit 11 may close the second switches 85, 87 and opens the switches 86, 88 and the command circuit 11 controls the controllable switches of the second switching units 102 so that the voltage V 117 of each second energy storage 117 is equal to the reference voltage Vref.

When the voltage V117 between the first end 117a and the second end 117b of the whole second energy storages 117 of the power converter 9 is equal to the reference voltage Vref, the switching units 73 and the second switching units 102 are considered as loaded.

If the power converter 9 comprises the filtering module 29, the command circuit 11 further controls the controllable switches of the switching units 73 and the switches to load the energy storage devices 29a, 29b.

In the preload step, the electrode(s) of arc furnace 2, 100 are not supplied.

During a step 201, when the whole second energy storages 117 of the power converter 9 is equal to the reference voltage Vref, the power converter 9 supplies the electrode(s) of the arc furnaces 2, 100.

The power converter 9 controls the controllable switches of the switching units 73 and the switches of the input modules 36, 37, 38, and the controllable switches of the second switching units 102 and the second switches of the input modules 44, 45, 46 so that the current supplying each electrode 2a, 2a, 2c, 100a of the arc furnace 2, 100 is equal to a predetermined current value, for example equal to 50 kA.

For each input module 36, 37, 38, the power controls 9 closes the switches 56, 58 and opens the switches 57, 59 when the voltage in the associated phase of the grid G is positive, and opens the switches 56, 58 and closes the switches 57, 59 when the voltage in the associated phase of the grid G is negative.

For each output module according to the first example illustrated on figure 3 and comprising the second switches 85, 86, 87, 88, the power controls 9 closes the second switches 85, 87 and opens the second switches 86, 88 when the voltage in the associated electrode 2a, 2b, 2c, 100a is positive, and opens the second switches 85, 87 and closes the second switches 86, 88 when the voltage in the associated 2a, 2b, 2c, 100a is negative.

For each input module 36, 37, 38, the command circuit 11 controls the controllable switches of the switching units 73 of the said input module so that the voltages V117 of the second energy storages 117 of the said input module are closed to the reference voltage Vref.

Similarly, for each output module 44, 45, 46, the command circuit 11 controls the controllable switches of the second switching units 102 of the said output module so the voltages V117 of the second energy storages 117 of the said input module are closed to the reference voltage Vref.

The energy storage devices 29a, 29b of filtering module 29 and the second energy storages 117 of the power converter 9 act as energy buffers to compensate the power fluctuation of the arc furnace 2, 100 so that the courant and the voltage delivered by the grid G is stabilized to reduce rejections in the grid G.

For example, when the current flowing in an electrode 2a, 2b, 2c is less than the predetermined current value, the controller 11 controls the controllable switches of the second switching units 102 of the output module 44, 45, 46 to deliver electrical energy stored in the energy storage devices 29a, 29b of filtering module 29 and in the second energy storages 117 of the said output module so that the current flowing to the electrode 2a, 2b, 2c is equal to the predetermined current value.

When the current flowing in an electrode 2a, 2b, 2c is higher than the predetermined current value, the controller 11 controls the controllable switches of the second switching units 102 of the output module 44, 45, 46 to store the excess energy in the energy storage devices 29a, 29b of filtering module 29 and in the second energy storages 117 of the said output module so that the current flowing to the electrode 2a, 2b, 2c is equal to the predetermined current value.

Furthermore, the controller 11 controls the controllable switches of the switching units 73 to load the energy storage devices 29a, 29b of filtering module 29 and the second energy storages 117 of the power converter 9.

## Claims

1. Power supply system (1) for arc furnace (2, 100) including:
- a power converter (9) intended to be connected to a polyphase supply grid (G), and
- a polyphase transformer (10) comprising a primary circuit connected to the power converter and a secondary circuit intended to be connected to at least one electrode of the arc furnace, wherein:
- the power converter comprises an input device (24), a link circuit (25) comprising a first bus (26) and a second bus (27), and an output device (28), wherein:
∘ the input device (24) comprises a plurality of input modules (36, 37, 38), each input module being connected to the first bus and the second bus and being intended to be connected to a different phase of the supply grid to supply the link circuit with a continuous voltage from the said phase of the supply grid,
∘ the output device (28) comprises a plurality of output modules (44, 45, 46), each output module being connected to the first bus and second bus and to a different phase of the primary circuit to supply the transformer with an alternative voltage from the circuit link,
**characterized in that** each input module (36, 37, 38) comprises:
- a leg (47), the leg comprising:
∘ a first string (48) connected to the first and second bus and comprising
- a plurality of switches (56, 57) connected in series, a first connecting node (60) situated between two switches (56, 57), a second connecting node (61) situated between two switches (58, 59) and a third connecting nodes (62) situated between two switches, and
∘ a second string (49) comprising:
- a first mid-connecting node (67),
- a plurality of switching units (73) connected in series and extending between the first and second connecting points, the first mid-connecting node being between two switching units so that the number of switching units between the first connecting point and the first mid-connecting node is equal to the number of switching units between the second connecting point and the first mid-connecting node,
the first mid-connecting node being intended to be connected to the said phase of the supply grid,
the third connecting node (62) of each input module being connected together,
the power supply system further comprises a command circuit (11) configured to command the switches, the switching units, and the output modules to supply the electrode and to stabilize the courant and the voltage delivered by the grid when the electrode of the arc furnace is supplied by the power supply system to reduce rejections in the grid.

2. Power supply system according to claim 1, wherein the leg (47) further comprises two compensating modules (133, 134), each compensating module comprising a first end (135, 136) and a plurality of switching units (73) connected in series, the switching units of the first compensating module extending between the first connecting node (60) and the first end of the first compensating unit, the switching units of the second compensating module extending between the second connecting node (61) and the first end of the second compensating module, the first ends of the first and second compensating units being connected together, the control circuit (11) being further configured to control the switching units of the compensating modules.

3. Power supply system according to claim 1 or 2, wherein the link circuit (25) further comprises a filtering module (29) including two second energy storage devices (29a, 29b) connected in series and extending between the first and the second bus (26, 27), a midpoint (29c) between the two second energy storage devices being connected to the third connecting node (62) of each input module (36, 37, 38).

4. Power supply system according to one of claims 1 to 3, wherein each switch (56, 57, 58, 59) comprises at least diode (112), the diodes of the switches being connected together so that the cathode of the diode of a switch is connected to the anode of the diode of an adjacent switch, the cathode of the diode of the switch at a first end of the first string being connected to the first bus and the anode of the diode of the switch at the second end of the first string being connected to the second bus.

5. Power supply system according to claim 4, wherein each switch (56, 57, 58, 59) further comprises at least a gate turn off thyristor (113), the anode of the gate turn off thyristor being connected to the cathode of the diode (112) and the cathode of the a gate turn off thyristor being connected to the anode of the diode, the gate of the gate turn off thyristor being connected to the command circuit.

6. Power supply system according to claim 4, wherein each switch (56, 57, 58, 59) further comprises at least a field effect transistor (114), wherein the drain of the transistor is connected to the cathode of the diode (112) and the source of the transistor is connected to the anode of the diode, the gate of the transistor being connected to the command circuit.

7. Power supply system according to any one of claims 1 to 6, wherein at least one switching unit (73) comprising two controllable switches (115, 116), each controllable switch comprising a first end (115a, 116a), a second end (115b, 116b), and an command input (115c, 116c) connected to the command circuit (11), the first end of a first controllable switch being connected to a first end of the energy storage device (117), the second end of the first controllable switch and the first end of the second controllable switch being connected to the first connection of the switching unit, and the second end of the second controllable switch being connected to the second end of the energy storage device and to the second connection of the switching unit.

8. Power supply system according to any one of claims 1 to 7, wherein at least one switching unit (73) comprising four controllable switches (118, 119, 120, 121), each controllable switch comprising a first end (118a, 119a, 120a, 121a), a second end (118b, 119b, 120b, 121b), and an command input (118c, 119c, 120c, 121c) connected to the command circuit (11), the first end of a first and a second controllable switches being connected to a first end of the energy storage device (406), the first end of a third controllable switch being connected to the first connection of the switching unit and to the second end of the first controllable switch, the first end of the fourth controllable switch being connected to the second connection of the switching unit and to the second end of the second controllable switch, and the second end of the third and fourth controllable switches being connected to the second end of the energy storage device (117).

9. Power supply system according to any one of claims 1 to 8, wherein each output module (44, 45, 46) comprises:
- a second leg (76) comprising:
∘ a third string (77) connected to the first and second bus and comprising a plurality of second switches (85, 86) connected in series and a fourth connecting node (89) situated between two second switches (85, 86), a fifth connecting node (90) situated between two second switches (87, 88), and a sixth connecting nodes (91) situated between two second switches, and
∘ a fourth string (78) comprising:
- a second mid-connecting node (95),
- a plurality of second switching units (102) connected in series and extending between the fourth and the fifth connecting nodes (89, 90), the second mid-connecting node being between two second switching units so that the number of second switching units between the fourth connecting point and the second mid-connecting node is equal to the number of switching units between the fifth connecting point and the second mid-connecting node,
the second mid-connecting node being connected to a phase of the primary circuit,
the sixth connecting node (91) of each output module being connected together,
the command circuit (11) being further configured to command the second switches and the second switching units to supply the electrode and to stabilize the courant and the voltage delivered by the grid when the electrode of the arc furnace is supplied by the power supply system to reduce rejections in the grid (G).

10. Power supply system according to claim 9, wherein each second switch (85, 86, 87, 88) comprises a second gate turn off thyristor (113) and a second diode (112), the second diodes of the second switches being connected together so that the cathode of the second diode of a second switch is connected to the anode of the second diode of an adjacent second switch, the cathode of the second diode of the second switch at a first end of the third string being connected to the first bus and the anode of the second diode of the second switch at the second end of the first string being connected to the second bus, the anode of the second gate turn off thyristor being connected to the cathode of the second diode and the cathode of the second gate turn off thyristor being connected to the anode of the second diode, and the gate of the second gate turn off thyristor being connected to the command circuit.

11. Power supply system according to claim 9, wherein each second switch (85, 86, 87, 88) comprises a second field effect transistor (114) and a second diode (112), the second diodes of the second switches being connected together so that the cathode of the second diode of a second switch is connected to the anode of the second diode of an adjacent second switch, the cathode of the second diode of the second switch at a first end of the third string being connected to the first bus and the anode of the second diode of the second switch at the second end of the first string being connected to the second bus, the drain of the second transistor being connected to the cathode of the second diode and the source of the second transistor being connected to the anode of the second diode, and the gate of the second transistor being connected to the command circuit.

12. Power supply system according to any one of claims 1 to 8, wherein each output module (44, 45, 46) comprises a fifth string comprising:
- a plurality of second switching units (102) connected in series and extending between the first and second bus (27, 28), and
- a third mid-connecting node (130);
- the third mid-connecting node being between two second switching units so that the number of second switching units between the first bus and the third mid-connecting node is equal to the number of switching units between the second bus and the third mid-connecting node,
the third mid-connecting node being connected to a phase of the primary circuit.

13. Arc furnace facility comprising an arc furnace (1, 100) including at least one electrode (2a, 2b, 2c, 100a) and a power supply system (1) according to any one of claims 1 to 12 wherein the electrode is connected to at least one phase of the secondary circuit of the polyphase transformer (10).

14. Arc furnace facility according to claim 13, wherein the arc furnace (2) comprises a plurality of electrodes (2a, 2b, 2c), each electrode being connected to a different phase of the secondary circuit.

15. Arc furnace facility according to claim 13, wherein the power supply system (1) further comprises a rectifier (139) connected to the electrode (100a) and to each phase of the secondary circuit to supply the electrode with a continuous voltage from the secondary circuit.
